(19) Europäisches Patentamt
European Patent Office
Office européen des brevets

(11) **EP 4 663 510 A1**

(12) **EUROPEAN PATENT APPLICATION**
published in accordance with Art. 153(4) EPC

(43) Date of publication:
**17.12.2025 Bulletin 2025/51**

(21) Application number: **23927129.9**

(22) Date of filing: **07.11.2023**

(51) International Patent Classification (IPC):
**B62D 5/00** (2006.01)

(52) Cooperative Patent Classification (CPC):
**B62D 9/005;** B62D 5/003; B62D 9/002; Y02T 10/72

(86) International application number:
**PCT/CN2023/130271**

(87) International publication number:
**WO 2024/187788 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.03.2023 CN 202310247001**

(71) Applicants:
• **Zhejiang Geely Holding Group Co., Ltd.
Hangzhou, Zhejiang 310051 (CN)**
• **Ningbo Geely Automobile Research
& Development Co. Ltd.
Hangzhou Bay New District
Ningbo 315336 (CN)**

(72) Inventors:
• **SONG, Huaiwen
Hangzhou, Zhejiang 310051 (CN)**
• **YANG, Pengfei
Hangzhou, Zhejiang 310051 (CN)**
• **HU, Xinyang
Hangzhou, Zhejiang 310051 (CN)**
• **TU, Su
Hangzhou, Zhejiang 310051 (CN)**
• **MENG, Fanpo
Hangzhou, Zhejiang 310051 (CN)**
• **LIANG, Daqiang
Hangzhou, Zhejiang 310051 (CN)**

(74) Representative: **Kraus & Lederer PartGmbB
Thomas-Wimmer-Ring 15
80539 München (DE)**

(54) **STEER-BY-WIRE CONTROL METHOD AND APPARATUS, AND ELECTRONIC DEVICE**

(57) The present disclosure provides a steer-by-wire control method and apparatus, and an electronic device, relating to the field of intelligent vehicle technologies. The method includes: obtaining a steering parameter of a vehicle, where the steering parameter is a steering ratio of a steering wheel to a tire; converting, based on the steering parameter, a steering signal of the steering wheel of the vehicle into a desired steering angle of the vehicle; and calculating a desired wheel speed of each of wheels of the vehicle based on the desired steering angle, and performing, for each of the wheels of the vehicle, wheel speed control for the wheel based on the desired wheel speed of the wheel.

```
                                                    ┌─ S11
┌──────────────────────────────────────────┐
│   Obtain a steering parameter of a vehicle │
└──────────────────────────────────────────┘
                      │
                                                    ┌─ S12
┌──────────────────────────────────────────┐
│ Convert, based on the steering parameter, a│
│ steering signal of the steering wheel of the│
│ vehicle into a desired steering angle       │
│ corresponding to the vehicle                │
└──────────────────────────────────────────┘
                      │
                                                    ┌─ S13
┌──────────────────────────────────────────┐
│ Calculate a desired wheel speed of each of  │
│ wheels of the vehicle based on the desired   │
│ steering angle, and perform, for each of the │
│ wheels of the vehicle, wheel speed control   │
│ for the wheel based on the desired wheel     │
│ speed of the wheel                           │
└──────────────────────────────────────────┘
```

FIG. 1

**Description**

**CROSS-REFERENCE TO RELATED APPLICATION**

This application claims priority to Chinese patent application No. 202310247001.5, titled "STEER-BY-WIRE CONTROL METHOD AND APPARATUS, AND ELECTRONIC DEVICE" on March 10, 2023, which is incorporated herein by reference in its entirety.

**FIELD**

The present disclosure relates to the field of intelligent vehicles, and more particularly, to a steer-by-wire control method and apparatus, and an electronic device.

**BACKGROUND**

With the development of intelligent vehicle technologies, a vehicle steer-by-wire system has gradually replaced the traditional mechanical steering system, to achieve steering of a vehicle by electric energy. The vehicle steer-by-wire system has greatly improved safety performance of the vehicle, and is an important direction in the development of vehicle intelligence. Compared with the traditional steering system, the steer-by-wire system can reduce mechanical and hydraulic structures, further reducing spatial layout restrictions among mechanical components in the steering system, and providing a good foundation for design of intelligent driving cockpits.

While the steer-by-wire technology provides numerous advantages, a disadvantage of lacking a backup steering function after software failure also exists. Once a by-wire signal fails, the steer-by-wire system will not be able to meet safe driving requirements. In order to solve the above problem, an electronic clutch apparatus is often mounted in a vehicle equipped with the steer-by-wire system to ensure that the steering system can continue to provide mechanical steering capabilities to enable the vehicle to steer in the event of software failure.

The steer-by-wire system combined with the electronic clutch realizes the switching from the steer-by-wire system to the traditional steering system. However, such combination features a relatively complex structure and a relatively high cost, and is inapplicable to intelligent vehicles.

**SUMMARY**

The present disclosure provides a steer-by-wire control method and apparatus, and an electronic device. When a by-wire signal fails and a main steering system cannot work normally, a backup steering system realizes steering control of a vehicle by adjusting a wheel speed of the vehicle.

In a first aspect, the present disclosure provides a steer-by-wheel control method. The method includes: obtaining a steering parameter of a vehicle, the steering parameter being a steering ratio of a steering wheel to a tire; converting, based on the steering parameter, a steering signal of the steering wheel of the vehicle into a desired steering angle corresponding to the vehicle; and calculating, based on the desired steering angle, a desired wheel speed of each of wheels of the vehicle, and performing, for each of the wheels of the vehicle, wheel speed control for the wheel based on the desired wheel speed of the wheel.

With the above method, when the main steering system fails and the by-wire signal is lost, the backup steering system can calculate the desired wheel speed of each of the wheels of the vehicle based on the desired steering angle of the vehicle. Therefore, by adjusting the wheel speed of the vehicle, the steering control of the vehicle is achieved when the main steering system fails, with a relatively simple structure, while no additional mechanical structure is required.

In a possible design, the method further includes, subsequent to said converting the steering signal of the steering wheel of the vehicle into the desired steering angle corresponding to the vehicle: obtaining a current vehicle speed of the vehicle; obtaining a tire slip angle of the vehicle, in response to the current vehicle speed being greater than a vehicle speed threshold; and correcting, based on the tire slip angle, the desired steering angle.

With the above method, during operation of the vehicle, the desired steering angle of the vehicle is adjusted in real time based on vehicle driving data, ensuring control accuracy of the vehicle steering.

In a possible design, said calculating the desired wheel speed of each of the wheels of the vehicle includes: obtaining a current yaw rate of the vehicle; adjusting a deflection angle corresponding to a target wheel, in response to the yaw rate being not equal to a theoretical yaw rate of the vehicle; and calculating, based on the deflection angle, the desired wheel speed of each of the wheels.

With the above method, by monitoring a driving condition of the vehicle and adjusting the desired wheel speed of each of the wheels of the vehicle in real time, the desired wheel speed of each of the wheels of the vehicle under an actual working condition can be obtained, ensuring steering accuracy of the vehicle.

In a possible design, said performing, for each of the wheels of the vehicle, the wheel speed control for the wheel based on the desired wheel speed of the wheel includes: determining inner wheels and outer wheels when the vehicle is steering; obtaining a first wheel speed corresponding to each of the outer wheels; determining, based on the desired wheel speed of each of the wheels and the first wheel speed, a second wheel speed corresponding to each of the inner wheels; and adjusting, based on the first wheel speed and the second wheel speed, a wheel speed of each of the inner wheels of the vehicle and a wheel speed of each of the outer wheels of the vehicle.

With the above method, subsequent to determining the inner wheels and the outer wheels when the vehicle is steering, by adjusting the wheel speed of each of the wheels of the vehicle based on the desired wheel speed of each of the wheels of the vehicle, steer-by-wire based on the wheel speed control can be achieved.

In a possible design, the desired wheel speed of each of the wheels of the vehicle is calculated by four-wheel speed relationship formulas. The four-wheel speed relationship formulas include:

$$\frac{V_2}{V_1} \approx 1 - \frac{J_r * \tan(\delta_0)}{L + \frac{1}{2} * (J_r - J_f) * \tan(\delta_0)} \quad \text{and} \quad \frac{V_4}{V_3} \approx 1 - \frac{J_r * \tan(\delta_0)}{L}$$

. L is a vehicle wheelbase, $J_f$ is a front track width, $J_r$ is a rear track width, $V_1$ is the desired wheel speed of a left rear wheel, $V_2$ is the desired wheel speed of a right rear wheel, $V_3$ is the desired wheel speed of a left front wheel, $V_4$ is the desired wheel speed of a right front wheel, and $\delta_0$ is a left-side wheel deflection angle.

In a second aspect, the present disclosure provides a steer-by-wire control apparatus. The apparatus includes: an obtaining module configured to obtain a steering parameter of a vehicle, the steering parameter being a steering ratio of a steering wheel to a tire; a converting module configured to convert, based on the steering parameter, a steering signal of the steering wheel of the vehicle into a desired steering angle of the vehicle; and a processing module configured to calculate, based on the desired steering angle, a desired wheel speed of each of wheels of the vehicle, and perform, for each of the wheels of the vehicle, steering control for the wheel based on the desired wheel speed.

In a possible design, the apparatus further includes a correction module configured to: obtain a current vehicle speed of the vehicle; obtain a tire slip angle of the vehicle, in response to the current vehicle speed being greater than a vehicle speed threshold; and correct, based on the tire slip angle, the desired steering angle.

In a possible design, the processing module is configured to: obtain a current yaw rate of the vehicle; adjust a deflection angle corresponding to a target wheel, in response to the current yaw rate of the vehicle being not equal to a theoretical yaw rate of the vehicle; and calculate, based on the deflection angle, the desired wheel speed of each of the wheels of the vehicle.

In a possible design, the processing module is further configured to: determine inner wheels and outer wheels when the vehicle is steering; obtain a first wheel speed corresponding to each of the outer wheels; determine, based on the desired wheel speed of each of the wheels and the first wheel speed, a second wheel speed corresponding to each of the inner wheels; and adjust, based on the first wheel speed and the second wheel speed, a wheel speed of each of the inner wheels of the vehicle and a wheel speed of each of the outer wheels of the vehicle.

In a possible design, the processing module is further configured to calculate the desired wheel speed of each of the wheels of the vehicle by four-wheel speed relationship formulas. The four-wheel speed relationship formulas include:

$$\frac{V_2}{V_1} \approx 1 - \frac{J_r * \tan(\delta_0)}{L + \frac{1}{2} * (J_r - J_f) * \tan(\delta_0)} \quad \text{and} \quad \frac{V_4}{V_3} \approx 1 - \frac{J_r * \tan(\delta_0)}{L}$$

. L is a vehicle wheelbase, $J_r$ is a front track width, $J_r$ is a rear track width, $V_1$ is the desired wheel speed of a left rear wheel, $V_2$ is the desired wheel speed of a right rear wheel, $V_3$ is the desired wheel speed of a left front wheel, $V_4$ is the desired wheel speed of a right front wheel, and $\delta_0$ is a left-side wheel deflection angle.

In a third aspect, the present disclosure provides an electronic device, including: a memory configured to store a computer program; and a processor configured to execute the computer program stored in the memory to implement operations of the above steer-by-wire control method.

In a fourth aspect, the present disclosure provides a computer-readable storage medium having a computer program stored thereon. The computer program, when executed by a processor, implements operations of the above steer-by-wire control method.

For each aspect from the second aspect to the fourth aspect and technical effects that may be achieved by each aspect, please refer to the above description of the technical effects that may be achieved by the first aspect and various possible solutions in the first aspect, and no further details will be given here.

**BRIEF DESCRIPTION OF THE DRAWINGS**

FIG. 1 is a flowchart of a steer-by-wire control method according to an embodiment of the present disclosure.
FIG. 2 is a schematic diagram of a vehicle steering structure according to an embodiment of the present disclosure.
FIG. 3 is a schematic diagram showing signal conversion according to an embodiment of the present disclosure.
FIG. 4 is a schematic diagram of a steer-by-wire control apparatus according to an embodiment of the present disclosure.
FIG. 5 is a schematic structural diagram of an electronic device according to an embodiment of the present disclosure.

**DETAILED DESCRIPTION**

In order to make objectives, technical solutions, and advantages of the present disclosure more apparent, the present disclosure will be described in further detail below with reference to the accompanying drawings. Specific operation methods in method embodiments can also be applied to apparatus embodiments or system embodiments. It should be noted that, in the description of the present disclosure, "a plurality of" refers to "at least two". The expression "and/or" describes an association relationship between correlated objects, including three relationships. For example, "A and/or B" can mean A only, B only, or both A and B. Connection between A and B can be represented by two situations: A is directly connected to B; and A is connected to B through C. In addition, in the description of the present disclosure, the terms "first" and "second" are only used for descriptive purposes, and cannot be understood as indicating or implying relative importance or indicating or implying order.

Embodiments of the present disclosure will be described below in conjunction with the accompanying drawings.

At present, a vehicle using the steer-by-wire technology generally includes two steering systems. When the main steering system fails, the backup steering system can assume the function of the main steering system, to ensure that the vehicle can normally realize a steering function when the main steering system fails. Currently, the backup steering system used is generally an electronic clutch apparatus. When the main steering system fails, the electronic clutch apparatus serves as the backup steering system to realize the steering function. However, essence of the electronic clutch apparatus is still a variant of the traditional mechanical steering system. Although the electronic clutch apparatus can achieve the switching from steer-by-wire to traditional mechanical steering, it has a complex space structure and a relatively high cost, and is inapplicable in intelligent vehicles.

Based on the above problem, an embodiment of the present disclosure provides a steer-by-wire control method. In the embodiments of the present disclosure, firstly, a desired steering angle of a vehicle is obtained based on a steering parameter of the vehicle, and a desired wheel speed of each of wheels of the vehicle corresponding to the desired steering angle is calculated. Further, based on the desired wheel speed of each of the wheels of the vehicle, different driving forces or braking forces are provided to the four wheels of the vehicle, to control driving of the vehicle. Further, during driving of the vehicle, driving data of the vehicle is obtained to adjust the desired steering angle of the vehicle and the desired wheel speed to ensure steering accuracy of the vehicle. In this way, when the main steering system fails, the backup steering system can control steering of the vehicle.

Therefore, with the method according to the embodiment of the present disclosure, steer-by-wire control based on wheel speed control can be realized, in such a manner that when the main steering system of the vehicle fails, the backup steering system can control the steering of the vehicle accurately, to avoid an accident caused by inability to control the steering of the vehicle due to a steering failure.

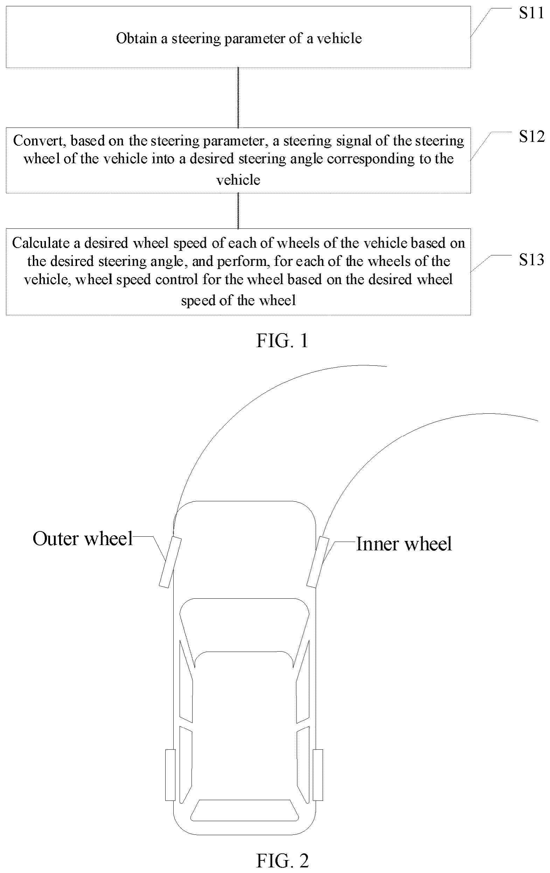

Technical solutions of the present disclosure are further described below in conjunction with specific embodiments. FIG. 1 illustrates a steer-by-wire control method according to the present disclosure. An implementation process of the method is as follows.

At step S11, a steering parameter of a vehicle is obtained.

Firstly, during driving of the vehicle, when a system detects that the main steering system of the vehicle has a serious failure and cannot complete desired steering of a driver, the backup steering system is activated. At this time, the backup steering system obtains the steering parameter of the vehicle through a steering feel simulator. The steering parameter is a steering ratio of a steering wheel to a tire, that is, a ratio of a rotating angle of the steering wheel to a steering angle of the wheel when the steering wheel is rotated. For example, if the steering wheel is rotated by 360 degrees, causing the wheel to be steered by 20 degrees, the steering ratio of the steering wheel to the tire is 360 divided by 20, that is, the steering ratio of the steering wheel to the tire is 18:1.

In the above process, a higher steering ratio of the steering wheel to the tire corresponds to a greater rotation amplitude of the steering wheel when the wheel needs to be steered by a certain angle, but a smaller force required to rotate the steering wheel. Conversely, a lower steering ratio of the steering wheel to the tire corresponds to a smaller rotation amplitude of the steering wheel when the wheel needs to be steered by a certain angle, and a faster response when the steering wheel is rotated. Since the steering ratio of the steering wheel to the tire varies in various different models, the steering parameter of the vehicle obtained through the steering feel simulator also varies depending on the model.

In addition, the backup steering system further obtains a wheel speed of each of outer wheels of the vehicle when the vehicle performs steering, and determines the wheel speed of each of the outer wheels of the vehicle as a reference wheel speed during steering. As illustrated in FIG. 2, when the vehicle performs rightward steering, a left front wheel and a left rear wheel are outer wheels, while a right front wheel and a right rear wheel are inner wheels. Similarly, when the vehicle performs leftward steering, the right front wheel and the right rear wheel are the outer wheels, while the left front wheel and the left rear wheel are the inner wheels.

With the above method, the steering parameter of the vehicle may be obtained and the wheel speed of each of the outer wheels of the vehicle when the vehicle performs steering may be obtained. In this way, based on the steering parameter of the vehicle, a steering signal of the steering wheel may be converted into a desired steering angle of the vehicle.

At step S12, based on the steering parameter of the vehicle, a steering signal of the steering wheel is converted into a desired steering angle of the vehicle.

Subsequent to the backup steering system obtaining the steering parameter of the vehicle, when further steering is performed, based on the steering parameter of the vehicle, the steering feel simulator in a steer-by-wire system of the vehicle converts a rotation angle by which the driver rotates the steering wheel into a steering signal, and converts the steering signal into a desired steering angle of the vehicle. For example, when the steering angle of the vehicle is calculated to be 10 degrees based on the steering ratio of the steering wheel to the tire of the vehicle, the steering feel simulator generates the steering signal based on the steering parameter, and converts the steering signal into the desired steering angle of the vehicle. In this case, the desired steering angle of the vehicle may be 15 degrees.

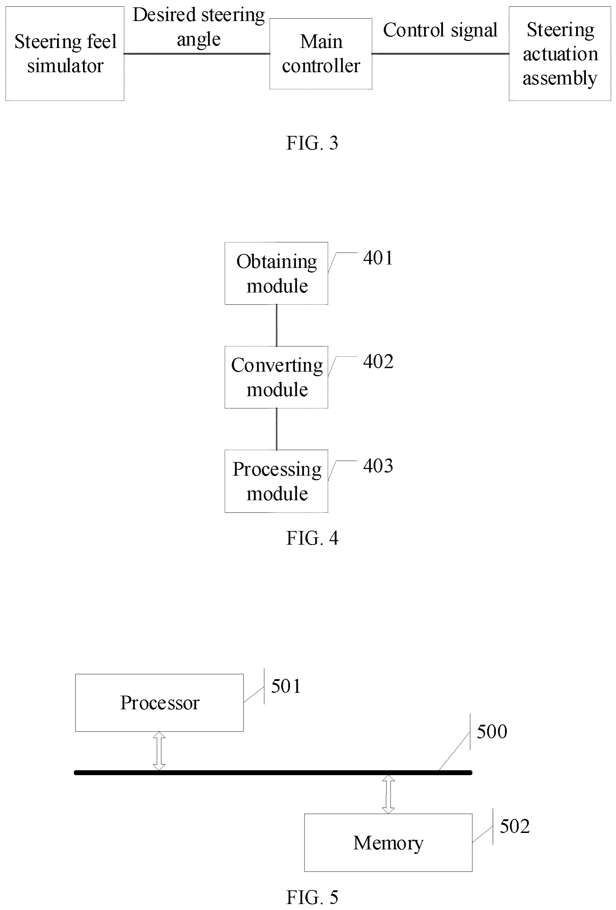

In an embodiment of the present disclosure, the above desired steering angle of the vehicle is subsequently converted into a control signal. As illustrated in FIG. 3, the steering feel simulator transmits the generated desired steering angle to a main controller in the steer-by-wire system of the vehicle. Subsequent to receiving the desired steering angle, the main controller generates a control signal corresponding to the desired steering angle and transmits the control signal to a steering actuation assembly in the steer-by-wire system of the vehicle.

In a possible application scenario, when a vehicle is running at a high speed, the above desired steering angle of the vehicle is affected by tire stiffness. A greater tire stiffness corresponds to a smaller slip angle, which leads to understeering. As a result, an actual steering angle is less than the desired steering angle, causing an error in the steering of the vehicle. Therefore, the above desired steering angle of the vehicle needs to be corrected, and a correction method is as follows.

Firstly, a current vehicle speed of the vehicle is obtained, where the current vehicle speed of the vehicle is an overall driving speed of the vehicle; a tire slip angle of the vehicle is obtained, in response to the current vehicle speed being greater than a vehicle speed threshold; and based on the tire slip angle, the desired steering angle is corrected.

In an embodiment of the present disclosure, there are two methods to obtain the tire slip angle $\alpha_f$. One is to use a vehicle dynamics model and simplify vehicle driving data to obtain a relationship between the tire slip angle, the vehicle speed, and a tire steering angle. The other is to directly obtain the relationship between the tire slip angle, the vehicle speed, and the tire steering angle based on test data. The tire slip angle $\alpha_f$ may be calculated by using the vehicle dynamics model according to the following formula:

$$\alpha_f = \tan^{-1}\left(\frac{V_y + lf * YawRate}{V_x}\right) - \delta_0 \qquad (1)$$

In formula (1), $l_f$ is a distance from a center of mass of the vehicle to a midpoint between front wheels; $V_x$ is a longitudinal velocity at the center of mass of the vehicle; $V_y$ is a lateral velocity at the center of mass of the vehicle; YawRate is a yaw rate of the vehicle; and $\delta_0$ is a left-side wheel deflection angle.

Subsequent to obtaining the tire slip angle through the above method, further, the desired steering angle of the vehicle is corrected based on the tire slip angle.

For example, a vehicle speed threshold is predetermined under a high-speed working condition, for example, the vehicle speed threshold is determined to be 60Km/h. In a driving process of the vehicle, when the vehicle speed exceeds the predetermined vehicle speed threshold of 60Km/h, the tire stiffness will affect the steering angle. At this time, the tire slip angle $\alpha_f$ under an actual working condition is calculated based on the formula (1). Further, the desired steering angle under the actual working condition is calculated by the following formula (2).

$$\delta = \delta_0 + \alpha_f \qquad (2)$$

Therefore, subsequent to calculating the tire slip angle $\alpha_f$ under the high-speed working condition, the desired steering angle under the high-speed working condition can be obtained, and the desired wheel speed of each of the wheels of the vehicle under the actual working condition can be further calculated based on the obtained desired steering angle, to improve wheel speed control accuracy and the steering accuracy when the vehicle is running at the high speed.

With the above method, the tire slip angle can be calculated, and the desired steering angle of the vehicle can be corrected in real time, enabling the vehicle to have high steering accuracy.

At step S13, based on the desired steering angle, a desired wheel speed of each of the wheels of the vehicle is calculated, and for each of the wheels of the vehicle, wheel speed control for the wheel is performed based on the desired wheel speed of the wheel.

Subsequent to obtaining the desired steering angle of each of the wheels of the vehicle, further, based on the desired steering angle of each of the wheels of the vehicle, the desired wheel speed of each of the wheels of the vehicle is calculated. In an embodiment, a relationship between speeds of four wheels of the vehicle is determined based on an Ackerman steering model, and the desired wheel speed of each of the wheels of the vehicle is calculated by four-wheel speed relationship formulas and the desired steering angle. The calculation formulas include:

$$\frac{V_2}{V_1} \approx 1 - \frac{J_r * \tan(\delta_0)}{L + \frac{1}{2} * (J_r - J_f) * \tan(\delta_0)} \qquad (3);$$

and

$$\frac{V_4}{V_3} \approx 1 - \frac{J_r * \tan(\delta_0)}{L} \qquad (4).$$

In formula (3) and formula (4), L is a vehicle wheelbase, $J_f$ is a front track width, $J_r$ is a rear track width, $V_1$ is a desired wheel speed of a left rear wheel, $V_2$ is a desired wheel speed of a right rear wheel, $V_3$ is a desired wheel speed of a left front wheel, $V_4$ is a desired wheel speed of a right front wheel, and $\delta_0$ is a left-side wheel deflection angle.

Based on the formula (3) and the formula (4), the desired wheel speed of the left rear wheel, the desired wheel speed of the right rear wheel, the desired wheel speed of the left front wheel, and the desired wheel speed of the right front wheel of the current vehicle can be determined when the vehicle is steering. When the vehicle is steering, an outer front wheel has a largest driving track radius and a fastest wheel speed. An outer rear wheel has a driving track radius smaller than the driving track radius of the outer front wheel, and a wheel speed smaller than the wheel speed of the outer front wheel. When the vehicle is steering, an inner rear wheel has a smallest steering radius and a slowest wheel speed. The wheel speeds between the four wheels are adjusted through a differential to meet conditions during steering. For example, when the vehicle is steering to right, the desired wheel speed of the left front wheel is calculated to be 40Km/h, the desired wire speed of the right front wheel is calculated to be 39Km/h, the desired wire speed of the left rear wheel is calculated to be 38Km/h, and the desired wheel speed of the right rear wheel is calculated to be 37Km/h. That is, when executing steering, the wheel speed of each of the outer wheels is always greater than the wheel speed of each of the inner wheels, and the wheel speed of each of the wheels can be adjusted to a corresponding desired wheel speed through the differential.

Subsequent to determining the desired wheel speed corresponding to each of the wheels of the vehicle, in a process of the steering of the vehicle, different braking forces or driving forces are provided to the four wheels of the vehicle. The wheel speed of the outer wheel is used as the reference wheel speed, and the wheel speed of each of the inner wheels is adjusted to reach the desired wheel speed for achieving the desired steering angle to achieve steering.

In a possible application scenario, whether the desired wheel speed of each of the wheels of the vehicle is correctly executed may be verified by a yaw rate of the vehicle. Therefore, real-time detection of the yaw rate of the vehicle is required to avoid a calculation error and a response error in a wheel speed control algorithm. An optional embodiment is as follows.

Firstly, a current yaw rate of the vehicle is obtained; a corresponding deflection angle of a target wheel is adjusted, in response to the yaw rate being not equal to a theoretical yaw rate of the vehicle; and based on the deflection angle, the desired wheel speed of each of the wheels is calculated.

In an embodiment, when the yaw rate collected by a sensor is inconsistent with a calculated theoretical yaw rate, a PID control method is used to adjust a wheel speed calculation input value $\delta_0$ of each of the wheels of the vehicle, i.e., the deflection angle of the target wheel in real time, and further adjust the desired wheel speed of each of the wheels of the vehicle.

The above calculated theoretical yaw rate may be obtained by the following formula (5):

$$YawRate = \frac{V_1 - V_2}{A \cos \delta_0} \qquad (5)$$

In the formula (5), $V_1$ is a wheel speed of the left rear wheel, and $V_2$ is a wheel speed of the right rear wheel.

Finally, based on an adjusted deflection angle of the target wheel, the desired wheel speed of each of the wheels is calculated. In an embodiment, in the driving process of the vehicle, a yaw rate sensor collects the yaw rate of the vehicle in real time and compares the collected yaw rate of the vehicle with the calculated theoretical yaw rate of the vehicle. When the collected yaw rate is inconsistent with the calculated theoretical yaw rate, the deflection angle $\delta_0$ of the target wheel is adjusted in real time through the PID control method. Subsequent to obtaining the wheel speed calculation input value $\delta_0$ of each of the wheels of the vehicle under the actual working condition, further, the desired wheel speed of each of the wheels of the vehicle under the actual working condition is calculated through the formula (3) and the formula (4), and the desired wheel speed of each of the wheels of the vehicle under the actual working condition is adjusted to ensure control accuracy of the desired steering angle.

For example, in the driving process of the vehicle, the yaw rate sensor detects that the current yaw rate of the vehicle is 10 rad/s. At this time, by obtaining driving data of the vehicle, a current wheel speed of the left rear wheel of the vehicle and a current wheel speed of the right rear wheel of the vehicle are obtained, and the theoretical yaw rate of the vehicle may be calculated by the formula (5). For example, the theoretical yaw rate calculated by the formula (5) is 12 rad/s, which is not equal to the current yaw rate of the vehicle detected by the yaw rate sensor. Further, the wheel speed calculation input value $\delta_0$ of each of the wheels of the vehicle is adjusted, and the desired wheel speed of each of the wheels of the vehicle under the actual working condition is calculated by the formula (3) and the formula (4), to adjust the wheel speed of each of the wheels of the vehicle.

In the driving process of the vehicle, by monitoring the yaw rate of the vehicle, when the yaw rate of the vehicle is different from the calculated theoretical value, the PID control method is used to adjust the wheel speed calculation input value $\delta_0$ in real time, which avoids the yaw rate of the vehicle not meeting an expectation caused by a change of a wheel slip state. The yaw rate of the vehicle is introduced to verify whether the desired wheel speed of each of the wheels of the vehicle is correctly executed, which ensures that the desired wheel speed of each of the wheels of the vehicle is accurately achieved, ensuring the steering accuracy of the vehicle.

In an embodiment of the present disclosure, subsequent to obtaining the desired wheel speed of each of the wheels of the vehicle and the wheel speed of each of the outer wheels of the vehicle, the inner wheels and the outer wheels when the vehicle is steering are determined, and a first wheel speed corresponding to each of the outer wheels is obtained. Further, based on the desired wheel speed of each of the wheels and the first wheel speed, a second wheel speed corresponding to each of the inner wheels is determined. Based on each first wheel speed and each second wheel speed, the wheel speed of each of the inner wheels of the vehicle and the wheel speed of each of the outer wheels of the vehicle are adjusted.

When the vehicle is steering, the wheel speed of each of the outer wheels is always greater than the wheel speed of each of the inner wheels. For example, when the vehicle is steering to right, left-side wheels are determined as the outer wheels, and right-side wheels are determined as the inner wheels. When the vehicle is steering, a steering radius of each of the outer wheels is greater than a steering radius of each of the inner wheels in a same period of time. Therefore, when the vehicle is steering, a movement distance of each of the outer wheels is greater than a movement distance of each of the inner wheels. Subsequent to further determining the inner wheels and the outer wheels when the vehicle is steering, different driving forces or braking forces are provided to the four wheels of the vehicle based on the desired wheel speed of each of the wheels of the vehicle, to ensure that the four wheels of the vehicle reach their respective desired wheel speeds to achieve steering control of the vehicle.

Based on the above method, when the main steering system of the vehicle fails, the backup steering system is activated. Based on the steering parameter of the vehicle, the steering signal of the steering wheel of the vehicle is converted into the desired steering angle of the vehicle. Further, the desired wheel speed to achieve the desired steering angle is calculated in real time based on an actual operating condition of the vehicle, and different driving forces or braking forces are provided to each of the wheels of the vehicle based on the desired wheel speed of the vehicle. The desired wheel speed of the vehicle is adjusted in real time in combination with the driving data of the vehicle during operation, improving a wheel speed control progress when the vehicle is moving, and further ensuring the steering accuracy of the vehicle.

Based on the same disclosed conception, an embodiment of the present disclosure further provides a steer-by-wire control apparatus. As illustrated in FIG. 4, the apparatus includes: an obtaining module 401 configured to obtain a steering parameter of a vehicle, where the steering parameter is a steering ratio of a steering wheel to a tire; a converting 402 module configured to convert, based on the steering parameter, a steering signal of the steering wheel of the vehicle into a desired steering angle of the vehicle; and a processing module 403 configured to calculate, based on the desired steering angle, a desired wheel speed of each of the wheels of the vehicle, and perform, for each of the wheels of the vehicle, wheel speed control for the wheel based on the desired wheel speed.

In a possible design, the apparatus further includes a correction module. The correction module is configured to: obtain a current vehicle speed of the vehicle; obtain a tire slip angle of the vehicle, in response to the current vehicle speed being greater than a vehicle speed threshold; and correct, based on the tire slip angle, the desired steering angle.

In a possible design, the processing module is configured to: obtain a current yaw rate of the vehicle; adjust a corresponding deflection angle of a target wheel, in response to the yaw rate of the vehicle being not equal to a theoretical yaw rate of the vehicle; and calculate, based on the deflection angle, the desired wheel speed of each of the wheels of the vehicle.

In a possible design, the processing module is further configured to: determine inner wheels and outer wheels when the vehicle is steering; obtain a first wheel speed corresponding to each of the outer wheels; determine, based on the desired wheel speed of each of the wheels and the first wheel speed, a second wheel speed corresponding to each of the inner wheels; and adjust, based on the first wheel speed and the second wheel speed, a wheel speed of each of the inner wheels of the vehicle and a wheel speed of each of the outer wheels of the vehicle.

In a possible design, the processing module is further configured to calculate the desired wheel speed of each of the wheels of the vehicle by four-wheel speed relationship formulas. The four-wheel speed relationship formulas include:

$$\frac{V_2}{V_1} \approx 1 - \frac{J_r * \tan(\delta_0)}{L + \frac{1}{2} * (J_r - J_f) * \tan(\delta_0)} \quad \text{and} \quad \frac{V_4}{V_3} \approx 1 - \frac{J_r * \tan(\delta_0)}{L}$$

. L is a vehicle wheelbase, $J_f$ is a front track width, $J_r$ is a rear track width, $V_1$ is a desired wheel speed of a left rear wheel, $V_2$ is a desired wheel speed of a right rear wheel, $V_3$ is a desired wheel speed of a left front wheel, $V_4$ is a desired wheel speed of a right front wheel, and $\delta_0$ is a left-side wheel deflection angle.

Based on the above steer-by-wheel control apparatus, when the main steering system fails and loses the steer-by-wire signal, the backup steering system can be ensured to calculate the desired wheel speed of each of the wheels based on the desired steering angle of the vehicle. Therefore, by adjusting the wheel speed of the vehicle, the steering control of the vehicle is achieved when the main steering system fails with a relatively simple structure, while no additional mechanical structure is required.

Based on the same disclosed conception, an electronic device is further provided according to an embodiment of the present disclosure, and the electronic device can implement functions of the above steer-by-wheel control method. As illustrated in FIG. 5, the electronic device includes at least one processor 501 and a memory 502 connected to the at least one processor 501. A connection medium between the processor 501 and the memory 502 is not limited in the embodiments of the present disclosure. As illustrated in FIG. 5, connection between the processor 501 and the memory 502 via a bus 500 is taken as an example. The bus 500 is represented by a thick line in FIG. 5, and connections between other components are merely illustrative and are not intended to be limiting. The bus 500 may include an address bus, a data bus, a control bus, etc. For ease of representation, only one thick line is used in FIG. 5, which does not mean that there is only one bus or one type of bus. Alternatively, the processor 501 may also be referred to as a controller, which is not limited in the present disclosure.

In an embodiment of the present disclosure, the memory 502 stores instructions that executable by the at least one processor 501. The at least one processor 501 can execute the steer-by-wire control method described above by executing the instructions stored in the memory 502. The processor 501 can implement functions of modules in the apparatus illustrated in FIG. 4.

The processor 501 is a control center of the apparatus, and can use various interfaces and lines to be connected to various parts of the entire control apparatus. By running or executing the instructions stored in the memory 502, and calling data stored in the memory 502 and various functions and processing data of the apparatus, the apparatus can be monitored as a whole.

In a possible design, the processor 501 may include one or more processing units. The processor 501 may integrate an application processor and a modem processor. The application processor mainly processes an operating system, a user interface, and application programs, and the modem processor mainly processes wireless communications. It should be understood that the modem processor may not be integrated into the processor 501. In some embodiments, the processor 501 and the memory 502 may be implemented on a same chip. In some embodiments, the processor 501 and the memory 502 may be implemented separately on independent chips.

The processor 501 may be a general-purpose processor, such as a central processing unit (CPU), a digital signal processor, an application-specific integrated circuit, a field programmable gate array or other programmable logic devices, a discrete gate or a transistor logic device, or discrete hardware components, and may implement or execute the various methods, operations, and logic block diagrams disclosed in the embodiments of the present disclosure. The general-purpose processor may be a microprocessor or any conventional processor, etc. The operations of the steer-by-wire control method disclosed in the embodiments of the present disclosure may be directly embodied as being executed by a hardware processor, or may be executed by a combination of hardware and software modules in the processor.

As a non-volatile computer-readable storage medium, the memory 502 can be used to store non-volatile software programs, non-volatile computer executable programs, and modules. The memory 502 may include at least one type of storage medium, such as a flash memory, a hard disk, a multimedia card, a card-type memory, a Random Access Memory (RAM), a Static Random Access Memory (SRAM), a Programmable Read Only Memory (PROM), a Read Only Memory (ROM), an Electrically Erasable Programmable Read-Only Memory (EEPROM), a magnetic memory, a disk, an optical disk, etc. The memory 502 is any other medium that can be used to carry or store a desired program code in a form of an instruction or data structure and can be accessed by a computer, but is not limited thereto. The memory 502 in the embodiments of the present disclosure can also be a circuit or any other apparatus that can realize a storage function, for storing program instructions and/or data.

By designing and programming the processor 501, the code corresponding to the steer-by-wire control method introduced in the above embodiments can be fixed into the chip, in such a manner that the chip can execute the operations of the steer-by-wire control method of the embodiments illustrated in FIG. 1 when the chip is running. How to design and program the processor 501 is a technology well known to those skilled in the art, which will not be described in detail here.

Based on the same disclosed conception, a storage medium is also provided according to an embodiment of the present disclosure. The storage medium has a computer instruction stored thereon. The computer instruction, when executed on a computer, causes the computer to implement the above steer-by-wire control method.

In some possible embodiments, various aspects of the steer-by-wire control method according to the present disclosure may also be implemented in a form of a program product, which includes a program code. When the program product is running on the apparatus, the program code is used to enable the control device to execute the operations of the steer-by-wire method according to various exemplary embodiments of the present disclosure described above in this specification.

Those skilled in the art should understand that the embodiments of the present disclosure can be provided as a method, a system, or a computer program product. Therefore, the present disclosure may adopt a form of a complete hardware embodiment, a complete software embodiment, or an embodiment combining software and hardware. In addition, the present disclosure may adopt a form of a computer program product implemented on one or more computer-usable storage media (including but not limited to a disk storage, a Compact Disc Read-Only Memory (CD-ROM), an optical storage, etc.) including computer-usable program codes.

The present disclosure is described with reference to flowcharts and/or block diagrams of the method, the device (system), and the computer program product according to the embodiments of the present disclosure. It should be understood that each process and/or block in the flowcharts and/or block diagrams, and a combination of processes and/or blocks in the flowcharts and/or block diagrams can be implemented by computer program instructions. These computer program instructions can be provided to a processor of a general-purpose computer, a special-purpose computer, an embedded processor, or other programmable data processing device to generate a machine, such that instructions executed by the processor of the computer or other programmable data processing devices generate an apparatus for implementing functions specified in one or more processes in the flowchart and/or one or more blocks in the block diagram.

These computer program instructions can further be stored in a computer-readable memory that can guide a computer or other programmable data processing devices to work in a specific manner, such that instructions stored in the computer-readable memory produce an article of manufacture including an instruction apparatus. The instruction apparatus implements functions specified in one or more processes in the flowchart and/or one or more blocks in the block diagram.

These computer program instructions can further be loaded on a computer or other programmable data processing devices to enable a series of operation steps to be executed on the computer or other programmable devices for producing computer-implemented processing, such that instructions executed on the computer or other programmable devices provide actions for implementing functions specified in one or more processes in the flowchart and/or one or more blocks in the block diagram.

Obviously, for those skilled in the art, various changes and modifications can be made to the present disclosure without departing from the spirit and scope of the present disclosure. Thus, if these variations and modifications of the present disclosure fall within the scope of the claims of the present disclosure and their equivalent technologies, the present disclosure is also intended to include these variations and modifications.

**Claims**

1. A steer-by-wire control method, comprising:

obtaining a steering parameter of a vehicle, wherein the steering parameter is a steering ratio of a steering wheel to a tire;

converting, based on the steering parameter, a steering signal of the steering wheel of the vehicle into a desired steering angle corresponding to the vehicle; and

calculating, based on the desired steering angle, a desired wheel speed of each of wheels of the vehicle, and performing, for each of the wheels of the vehicle, wheel speed control for the wheel based on the desired wheel speed of the wheel.

2. The method according to claim 1, further comprising, subsequent to said converting the steering signal of the steering wheel of the vehicle into the desired steering angle corresponding to the vehicle:

obtaining a current vehicle speed of the vehicle;

obtaining a tire slip angle of the vehicle, in response to the current vehicle speed being greater than a vehicle speed threshold; and

correcting, based on the tire slip angle, the desired steering angle.

3. The method according to claim 1 or 2, wherein said calculating the desired wheel speed of each of the wheels of the vehicle comprises:

obtaining a current yaw rate of the vehicle;

adjusting a deflection angle corresponding to a target wheel, in response to the yaw rate being not equal to a theoretical yaw rate of the vehicle; and

calculating, based on the deflection angle, the desired wheel speed of each of the wheels.

4. The method according to any one of claims 1 to 3, wherein said performing, for each of the wheels of the vehicle, the wheel speed control for the wheel based on the desired wheel speed of the wheel comprises:

determining inner wheels and outer wheels when the vehicle is steering;

obtaining a first wheel speed corresponding to each of the outer wheels;

determining, based on the desired wheel speed of each of the wheels and the first wheel speed, a second wheel speed corresponding to each of the inner wheels; and

adjusting, based on the first wheel speed and the second wheel speed, a wheel speed of each of the inner wheels of the vehicle and a wheel speed of each of the outer wheels of the vehicle.

5. The method according to any one of claims 1 to 4, wherein:

the desired wheel speed of each of the wheels of the vehicle is calculated by four-wheel speed relationship formulas, wherein

the four-wheel speed relationship formulas comprise:
$$\frac{V_2}{V_1} \approx 1 - \frac{J_r * \tan\left(\delta_0\right)}{L + \frac{1}{2} * \left(J_r - J_f\right) * \tan\left(\delta_0\right)} \quad \text{and}$$

$$\frac{V_4}{V_3} \approx 1 - \frac{J_r * \tan\left(\delta_0\right)}{L},$$

wherein L is a vehicle wheelbase, $J_f$ is a front track width, $J_r$ is a rear track width, $V_1$ is the desired wheel speed of a left rear wheel, $V_2$ is the desired wheel speed of a right rear wheel, $V_3$ is the desired wheel speed of a left front wheel, $V_4$ is the desired wheel speed of a right front wheel, and $\delta_0$ is a left-side wheel deflection angle.

6. A steer-by-wire control apparatus, comprising:

an obtaining module configured to obtain a steering parameter of a vehicle, wherein the steering parameter is a steering ratio of a steering wheel to a tire;

a converting module configured to convert, based on the steering parameter, a steering signal of the steering wheel of the vehicle into a desired steering angle of the vehicle; and

a processing module configured to calculate, based on the desired steering angle, a desired wheel speed of each of wheels of the vehicle, and perform, for each of the wheels of the vehicle, wheel speed control for the wheel based on the desired wheel speed.

7. The apparatus according to claim 6, further comprising a correction module configured to:

obtain a current vehicle speed of the vehicle;
obtain a tire slip angle of the vehicle, in response to the current vehicle speed being greater than a vehicle speed threshold; and
correct, based on the tire slip angle, the desired steering angle.

8. The apparatus according to claim 6 or 7, wherein the processing module is further configured to:

obtain a current yaw rate of the vehicle;
adjust a deflection angle corresponding to a target wheel, in response to the current yaw rate of the vehicle being not equal to a theoretical yaw rate of the vehicle; and
calculate, based on the deflection angle, the desired wheel speed of each of the wheels of the vehicle.

9. An electronic device, comprising:

a memory configured to store a computer program; and
a processor configured to execute the computer program stored in the memory to implement the method according to any one of claims 1 to 5.

10. A computer-readable storage medium having a computer program stored thereon, wherein the computer program, when executed by a processor, implements the method according to any one of claims 1 to 5.

Obtain a steering parameter of a vehicle — S11

Convert, based on the steering parameter, a steering signal of the steering wheel of the vehicle into a desired steering angle corresponding to the vehicle — S12

Calculate a desired wheel speed of each of wheels of the vehicle based on the desired steering angle, and perform, for each of the wheels of the vehicle, wheel speed control for the wheel based on the desired wheel speed of the wheel — S13

FIG. 1

Outer wheel — — Inner wheel

FIG. 2

```
┌──────────────┐  Desired steering ┌──────────────┐  Control signal ┌──────────────┐
│ Steering feel│      angle        │     Main     │                 │   Steering   │
│  simulator   ├───────────────────┤  controller  ├─────────────────┤  actuation   │
│              │                   │              │                 │   assembly   │
└──────────────┘                   └──────────────┘                 └──────────────┘
```

FIG. 3

```
        ┌──────────────┐
        │  Obtaining   ┌─ 401
        │   module     │
        └──────┬───────┘
               │
        ┌──────┴───────┐
        │  Converting  ┌─ 402
        │   module     │
        └──────┬───────┘
               │
        ┌──────┴───────┐
        │  Processing  ┌─ 403
        │   module     │
        └──────────────┘
```

FIG. 4

```
  ┌──────────────────┐
  │                  │┌ 501
  │    Processor     │
  │                  │
  └────────┬─────────┘
           ↕                                        ┌ 500
  ━━━━━━━━━━━━━━━━━━━━━━━━━━━━━━━━━━━━━━━━━━━━━━━━━━
                                       ↕
                          ┌──────────────────────┐┌ 502
                          │                      │
                          │        Memory        │
                          │                      │
                          └──────────────────────┘
```

FIG. 5

## INTERNATIONAL SEARCH REPORT

| International application No. |
| --- |
| **PCT/CN2023/130271** |

| A. | CLASSIFICATION OF SUBJECT MATTER |
| --- | --- |
| | B62D5/00(2006.01)i |

According to International Patent Classification (IPC) or to both national classification and IPC

| B. | FIELDS SEARCHED |
| --- | --- |

Minimum documentation searched (classification system followed by classification symbols)

IPC:B62D

Documentation searched other than minimum documentation to the extent that such documents are included in the fields searched

Electronic data base consulted during the international search (name of data base and, where practicable, search terms used)

CNTXT, ENTXTC, CNKI: 线控, 传动比, 齿轮比, 驱动比, 轮速, 转速, 转向角, 转角, 期望, 目标, 理想; ENTXT, VEN: wire control, drive ratio, transmission ratio, speed, velocity, angle, aim, object, target.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116161102 A (ZHEJIANG GEELY AUTOMOBILE HOLDINGS LIMITED et al.) 26 May 2023 (2023-05-26)<br>claims 1-10, description, paragraphs 64-137, and figures 1-5 | 1-10 |
| X | CN 113002324 A (JILIN UNIVERSITY et al.) 22 June 2021 (2021-06-22)<br>description, paragraphs 147-342, and figures 1-5 | 1-10 |
| Y | CN 115489597 A (JILIN UNIVERSITY) 20 December 2022 (2022-12-20)<br>description, paragraphs 58-102, and figures 1-4 | 1-10 |
| Y | CN 108860296 A (XIAMEN UNIVERSITY OF TECHNOLOGY) 23 November 2018 (2018-11-23)<br>description, paragraphs 30-57, and figures 1-3 | 1-10 |
| A | CN 110509781 A (DEEPBLUE TECHNOLOGY (SHANGHAI) CO., LTD.) 29 November 2019 (2019-11-29)<br>entire document | 1-10 |
| A | CN 109094640 A (XI'AN UNIVERSITY OF TECHNOLOGY) 28 December 2018 (2018-12-28)<br>entire document | 1-10 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **28 January 2024** | **02 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| :--- |
| **PCT/CN2023/130271** |

| C. | DOCUMENTS CONSIDERED TO BE RELEVANT | | |
| :---: | :--- | :---: |
| Category* | Citation of document, with indication, where appropriate, of the relevant passages | Relevant to claim No. |
| A | CN 107554603 A (ZHU HENG) 09 January 2018 (2018-01-09)<br>  entire document | 1-10 |
| A | JP 2022149717 A (TOYOTA MOTOR CORP. et al.) 07 October 2022 (2022-10-07)<br>  entire document | 1-10 |
| A | CN 207747932 U (ADVANCED VEHICLE DESIGN WUHAN LTD.) 21 August 2018<br>(2018-08-21)<br>  entire document | 1-10 |

Form PCT/ISA/210 (second sheet) (July 2022)

**INTERNATIONAL SEARCH REPORT**
Information on patent family members

| International application No. |
| --- |
| **PCT/CN2023/130271** |

| Patent document cited in search report | | | Publication date (day/month/year) | Patent family member(s) | | | Publication date (day/month/year) |
| --- | --- | --- | --- | --- | --- | --- | --- |
| CN | 116161102 | A | 26 May 2023 | None | | | |
| CN | 113002324 | A | 22 June 2021 | CN | 113002324 | B | 02 September 2022 |
| CN | 115489597 | A | 20 December 2022 | None | | | |
| CN | 108860296 | A | 23 November 2018 | CN | 108860296 | B | 28 July 2023 |
| | | | | CN | 208682910 | U | 02 April 2019 |
| CN | 110509781 | A | 29 November 2019 | None | | | |
| CN | 109094640 | A | 28 December 2018 | CN | 109094640 | B | 20 July 2021 |
| CN | 107554603 | A | 09 January 2018 | CN | 205769559 | U | 07 December 2016 |
| JP | 2022149717 | A | 07 October 2022 | None | | | |
| CN | 207747932 | U | 21 August 2018 | CN | 107985395 | A | 04 May 2018 |

Form PCT/ISA/210 (patent family annex) (July 2022)

**REFERENCES CITED IN THE DESCRIPTION**

**Patent documents cited in the description**

- CN 202310247001